(19) Europäisches Patentamt

European Patent Office

Office européen des brevets

(11) **EP 4 691 620 A1**

(12) **EUROPEAN PATENT APPLICATION**

(43) Date of publication:
**11.02.2026 Bulletin 2026/07**

(21) Application number: **24192863.9**

(22) Date of filing: **05.08.2024**

(51) International Patent Classification (IPC):
**B01J 19/12** (2006.01)  **B01J 19/24** (2006.01)

(52) Cooperative Patent Classification (CPC):
**B01J 19/123; B01J 19/125; B01J 19/126;**
**B01J 19/127; B01J 19/128; B01J 19/2415;**
**B01J 19/2425; B01J 19/244; B01J 19/245;**
B01J 2219/1943

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Nederlandse Organisatie voor**
**toegepast-**
**natuurwetenschappelijk onderzoek TNO**
**2595 DA 's-Gravenhage (NL)**

(72) Inventors:
• **XU, Man**
**2595 DA 's-Gravenshage (NL)**

• **CHENG, Lun-Kai**
**2595 DA 's-Gravenshage (NL)**
• **BUSKENS, Pascal Jozef Paul**
**2595 DA 's-Gravenshage (NL)**
• **VAN DEN HAM, Evert Jonathan**
**2595 DA 's-Gravenshage (NL)**
• **MEULENDIJKS-KIGGEN, Nicole Maria Matthias**
**2595 DA 's-Gravenshage (NL)**
• **VAN DER VUURST, David Petrus**
**2595 DA 's-Gravenshage (NL)**

(74) Representative: **V.O.**
**P.O. Box 87930**
**2508 DH Den Haag (NL)**

(54) **REACTOR FOR PHOTOINDUCED REACTIONS**

(57) The invention is in the field of reactors, in particular in the field of reactors for photoinduced reactions. The invention is further related to a kit of parts comprising such a reactor and a light focusing unit. The invention is even further related to a reactor array comprising one or more of the reactors and further to the use of the reactor.

**FIG 1A**

## Description

The invention is in the field of reactors, in particular in the field of reactors for photoinduced reactions. The invention is further related to a kit of parts comprising such a reactor and a light focusing unit. The invention is even further related to a reactor array comprising one or more of the reactors and further to the use of the reactor.

Photoinduced reactions are considered chemical reactions that require light. These may be classified into photochemical and/or photothermal reactions. Photothermal reactions typically involve conversion of light into heat (or vibrational energy). This may allow for increased energy, such as sufficient activation energy to accelerate a reaction. Photochemical reactions typically involve absorption of light that leads to electronic excitation. Thus, the absorbed light promotes the substrate to a higher-energy state, that may undergo various physical and chemical processes. Examples wherein the substrate goes back to its ground state, without consuming the substrate, may be fluorescence and phosphorescence. The light may alternatively allow for the input of energy required to initiate a chemical change.

Photoinduced reactions may provide sustainable pathways to direct production from optical energy, such as solar energy to industrially relevant chemicals. In addition, photoinduced reactions may allow for milder alternative reactions compared to conventional synthetic chemical reactions.

Industry and academia have increasingly taken an interest into optimizing the conditions for photoinduced reactions. As detailed in an article by Sambiagio and Noël (Trends in Chemistry, February 2020, Vol. 2. No. 2), parameters to consider in photoinduced reactions include *i.a.* the reactor design. This includes the size, shape and material, as well as the positioning of the light source and the heat-transfer properties.

In view thereof, several reaction designs have been suggested, as also discussed in the article by Sambiagio and Noël.

A first example is a transparent tubing coiled around a light source or surrounded by it for uniform irradiation. A second example is a tube-in-tube reactor, wherein the tubes are made of a transparent material.

A further example relates to providing a collector, separately from the reactor. This collector allows for concentrating the light beams to a reactor. Several examples thereof are provided by Michael Oelgemöller (Chem Rev. 2016, 116, 9664-9682).

However, the proposed reactors and systems are large and provide difficulties in combining solar and artificial light. The artificial light sources that are often used, are energy demanding. Further, the ratio of the reactor area and light collection area is small, resulting in a low light usage efficiency. The reactor area is limited and hence the production of the photoinduced reaction system per light collection area is also limited. Light usage efficiency is typically used to refer to the amount of light (or energy) produced in relation to the light (or energy) absorbed.

It is an objective of the present inventors to provide a reactor that overcomes at least part of these drawbacks. In particular, it is an objective of the present inventors to provide a compact reactor that allows for a high light usage efficiency. It was found that this objective can be met by a reactor comprising a reflective coating.

It was further realized by the present inventors that the shape of the reactor may also be optimized to allow for light concentration. This even further increases light usage efficiency and provides for an even more compact reactor.

Figure 1A illustrates a side-view of a preferred reactor in accordance with the present invention.
Figure 1B illustrates a cross-section of a preferred reactor in accordance with the present invention.
Figure 2 illustrates a cross-section of a preferred reactor in accordance with the present invention.
Figure 3 schematically illustrates the effect of a preferred parabolic segment.
Figure 4 illustrates a cross-section of a preferred kit of parts comprising a reactor and a light concentrator unit in accordance with the present invention.
Figures 5A-C, Figures 6A-B and Figure 7 illustrate cross-sections of preferred reactor arrays in accordance with the present invention.

Thus, the present invention relates to a reactor for photoinduced reactions. It may be appreciated that the present reactor may also be suitably employed for plasmon resonance based techniques. The reactor comprises a reactor wall and a processing conduit. The processing conduit is typically the conduit in which the photoinduced reaction takes place. Accordingly, in order for light to be received in the processing conduit, the reactor wall is at least transparent. The reactor wall is at least partially coated with a reflective coating along a circumferential and longitudinal direction of the reactor wall. The reactor according to the invention is thus compact, as it does not necessarily use an external light concentrator which is significantly larger than the reactor wall dimension. Additionally, the ratio between the reactor area and the light collection area is large, resulting in a high light usage efficiency and a small footprint per processing conduit.

Advantageously, the reflective coating allows for light to be reflected towards the processing conduit, thereby increasing the light usage efficiency. The light efficiency usage is even further increased, if the reflective coating is along essentially the entire longitudinal direction, which is therefore preferred. The reflective coating is preferably partially along the circumferential direction, in particular such that incoming light waves do not have to be transmitted through the reflective coating.

The reflective coating comprises a reflective side, that is arranged to reflect incoming light towards the processing conduit. Accordingly, the reflective side is typically facing the inner part of the reactor, such as facing the processing conduit.

It may be appreciated that herein 'towards' indicates that any incoming light beam may be reflected to the vicinity of the processing conduit. It is not necessarily the case that the reflected light beam enters the processing conduit. For the term 'towards' it is sufficient that the light beam is reflected from the reflective coating towards the inner part of the reactor.

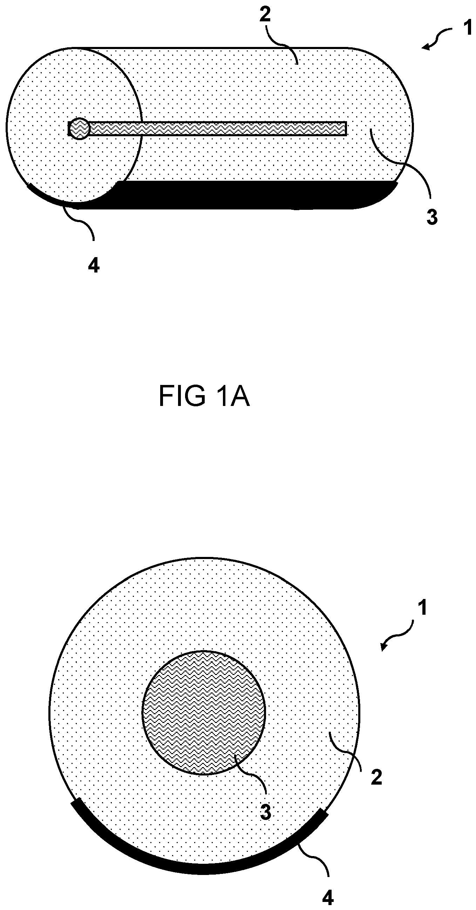

A schematic illustration of a suitable reactor is provided in Figure 1A and 1B. Figure 1A illustrates a side-view of a preferred reactor 1 comprising a reactor wall 2 and a processing conduit 3. The reactor wall is at least partially coated with the reflective coating 4. Similarly, in Figure 1B a cross-section of a preferred reactor is provided. From these figures, it is clearly illustrated that the reflective coating is along at least part of the circumferential and longitudinal direction of the reactor wall.

Accordingly, the reactor may be considered as a reactor wall in which a perforation is present throughout essentially the entire longitudinal direction. This perforation is in such cases considered the processing conduit. Alternatively, the processing conduit may be considered a separate entity inside the reactor wall. For instance, in a tube-in-tube configuration.

The transparency of the reactor wall is typically at least along a circumferential and longitudinal direction of the reactor wall. Nonetheless, it may be appreciated that essentially the entire reactor wall, (*e.g.* all of the reactor wall except any parts required for any connections, such as wires) is transparent. Transparent is herein used to describe that electromagnetic waves (herein also simply referred to as light, light beams and light waves) may be transmitted through the material. Typically, transparent herein is used to describe a transmittance of 95% of electromagnetic waves having wavelength in the range of $10^{-3}$ to $10^{-9}$ m. Accordingly, the transparency is typically such that light waves may be transmitted that have wavelengths suitable for the desired photoinduced reaction. The reactor wall is therefore preferably at least partially transparent, such as with a transmittance of 90% or 85%, for electromagnetic waves having a wavelength in the range of $10^{-3}$ to $10^{-9}$ m, preferably in the range of $10^{-5}$ to $10^{-8}$ m. Generally, the light that reaches earth from sunlight is mostly in the range of 100 nm to 3000 nm, such as 200 nm to 2400 nm. Accordingly, it is most preferred that the reactor wall is at least partially transparent for light with such wavelengths.

The material of the reactor wall is not particularly limiting, as long as it allows for this at least partial transparency. Accordingly, the reactor wall preferably comprises glass, quartz, fused silica, fluorine doped fused silica, borosilicate glass, polycarbonate, ceramic, tempered soda lime glass, sapphire, glass-ceramics, metal-oxide coated glass and/or metal oxide. Additives such as porous filler material may additionally or alternatively be present. Particularly preferred materials are glass, quartz, fused silica, fluorine doped fused silica, borosilicate glass and/or polycarbonate, preferably glass.

As these light waves are transmitted through the reactor wall, at least part of these reach the processing conduit. At least part of these light waves may also bypass the processing conduit and find way to the reflective coating. Additionally or alternatively, light waves may exit the processing conduit after having given energy to the materials in the processing conduit during operation, such as starting chemicals. The reflective coating therefore preferably reflects electromagnetic waves having a wavelength in the range of $10^{-3}$ to $10^{-9}$ m, preferably in the range of $10^{-5}$ to $10^{-8}$ m, more preferably in the range of 100 nm to 3000 nm, such as 200 nm to 2400 nm. Suitably reflective coatings are known in the art. Suitable examples include metallic mirrors, polished aluminum and/or silver, for instance the commercially available VEGALED and Microsilver materials

As a small amount of light may be reflected already by the reactor wall, it may be preferred to have the reactor wall at least partially coated with an anti-reflective coating. This anti-reflective coating at least partially prevents light to be reflected from the reactor wall and thus increases transmission and overall efficiency. The anti-reflective coating is usually along a circumferential and longitudinal direction of the reactor wall and arranged to at least partially transmit an incoming light beam, such as to the processing conduit. Typically, the anti-reflective coating is on an outer surface of the reactor wall for manufacturing ease.

The anti-reflective coating is typically on an opposite side compared to the reflective coating. An incoming light beam is typically first transmitted through the anti-reflective coating, through a side of the reactor wall until it hits the processing conduit. The light beam may travel further and through the further side of the reactor wall until it meets the reflective coating. In a specific embodiment an incoming light beam goes first to the reflective coating.

The reactor may be a batch or continuous reactor. Photoinduced reactions are typically performed in continuous and/or flow reactors. It is typically preferred to have a tubular, such as a cylindrical, shaped batch or continuous reactor. This is typically a convenient reactor design. In preferred cases, photoinduced reactors are performed in flow reactors. Flow reactors are considered advantageous as this allows for continuous, flexible operation of sustainable chemical processes. Examples include $CO_2$ based methanation, methanol production, syngas production and more. Accordingly, the reactor is preferably a flow reactor, more preferably a tubular flow reactor. During use, the processing conduit may thus comprise the reactants and/or the catalyst. The reactants may be in the liquid and/or gas phase. The catalyst may be heterogeneous and/or homogeneous. Photoinduced reactions may be single flow or multiphasic flow. Multiphasic refers to having two or more states of matter in the reactor, such as a flow comprising liquid and gaseous phase, a flow comprising a solid and gaseous phase and/or a flow comprising solid and liquid phase. It may be appreciated that the flow may also comprise a supercritical phase, possibly in combination with another phase (in case of a multiphasic flow). The reactor is accordingly most preferably a flow reactor for multiphasic photoinduced reactions. In particular, the reactor may be a plug flow or continuous tubular flow reactor.

Due to the pressures that may be associated with the photoinduced reactions, it is typically preferred that the reactor wall is sufficiently pressure resistance. In addition, it preferably withstands high temperatures. Some working pressures and temperatures that are common for photoinduced reactions are pressures up to 70 or even up to 100 bar and/or temperatures from 150 to 500 °C. In order to have a safe design, a factor 4 is typically included. The dimensions of the reactor are generally following Barlow's equation.

$$P_{max} = \frac{2 \cdot (D_O - D_i) \cdot S}{D_O} \qquad \text{(Barlow's equation)}$$

Wherein Do is outer diameter, Di is inner diameter (related to the wall thickness) and S is the yield strength of the transparant material used.

Accordingly, it is typically preferred that the reactor wall has an average thickness in the range of 2 to 50 mm, preferably 3 to 25 mm, more preferably 5 to 105 mm. Average thickness herein refers to the width of the reactor wall, measured from opposing outer surfaces. In case the cross-section is circular, the average thickness relates to the outer diameter.

The processing conduit typically has a diameter that may allow for an efficient interaction between the reactants and light. In some cases, a catalyst may be present in the processing conduit, such as a catalyst bed. The diameter of the processing conduit, also preferably allows for an efficient interaction between the reactants and the catalyst in such cases. This may be most evident for relatively small diameters. However, a too small diameter may result in pressure drop issues. Accordingly, it is preferred that the processing conduit has an average diameter up to 15 cm, preferably up to 10 cm or up to 5 cm. More preferably, the average diameter of the processing conduit is in the range of 0.1 to 40 mm, preferably 0.3 to 20 mm, more preferably 0.5 to 10 mm, or 0.7 to 5 mm. Smaller sizes in the range of 0.1 to 3 mm or 0.3 mm to 2 mm may also be feasible.

To allow for the optimal conditions, in terms of ease of manufacturing, symmetry for light input, it is preferred that the reactor wall and the processing conduit are co-axially arranged. To allow for an even distribution of the incoming light and to have optimal reaction conditions, it is even more preferred that the cross-section of the processing conduit is essentially circular. The cross-section is in the direction perpendicular to the longitudinal direction of the processing conduit.

For optimal light usage efficiency, the reactor wall and reflective coating are together typically configured such that an incoming light beam is reflected to the processing conduit, preferably towards the center of the processing conduit. The incoming light beam is usually arranged perpendicular to the longitudinal direction of the reactor and from the opposite side of the reflection coating. Nonetheless, it may be appreciated that the incoming light beam may also be from other angles. For instance, the reactor design may be such that it may collect light efficiently over a range of incident angles, both azimuth and zenith angles.

More preferably, the incoming light is a collimated light beam. The term 'collimated light beam', also referred to as 'collimated beam', is known in the art and refers to a beam of light that is parallel and uniform, with minimal divergence or spreading (such as with an angle to parallel of at most 1 degree or at most 0.5 degrees) as it propagates. Several examples of light sources that provide collimated beams is the sun and/or a laser. Lasers are typically optically efficient and can be highly collimated, for instance compared to LEDs, and may be easy to direct light to the reactor as well as convenient for reactor design. It may be appreciated that another light source may also be employed, for instance in combination with a collimator to minimize the divergence. However, the usage of other light sources in combination with collimators are typically less preferred, as it requires more components and increases the complexity while the light focusing effect is still worse than using a laser. The reactor may be used in combination with a variety of light sources and the light source may be easily exchanged, without compromising the light usage efficiency. This is particularly advantageous in case highly collimated light source i.a. sun light is used, as the provision thereof may fluctuate. The easy exchange to artificial light sources, such as a laser, may be easily implemented while retaining the high light usage efficiency.

Depending on the exact design of the reactor, this arrangement between the reactor wall and the reflective coating to reflect an incoming light beam may take a variety of forms.

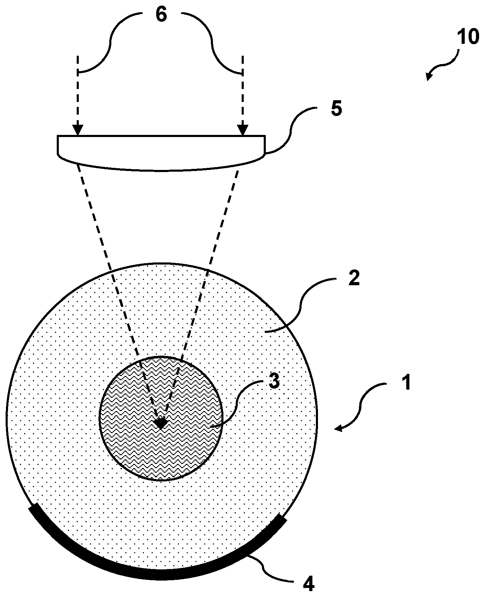

A preferred manner is that the reactor wall has an essentially circular cross-section. The reflective coating is then typically placed on an opposite site of the reactor wall, compared to an incoming light beam. In such cases, it is typically preferred to have a light focusing unit (*vide infra* and see Figure 4).

The light focusing unit may also be incorporated into the reactor wall. Accordingly, the reactor wall may preferably comprise a lens arranged to focus an incoming light beam to the processing conduit, preferably wherein the lens comprises a Fresnel lens. Additionally, it may be preferred to have the anti-reflective coating on the side of the reactor wall that is located closest to the light source providing the incoming light beam.

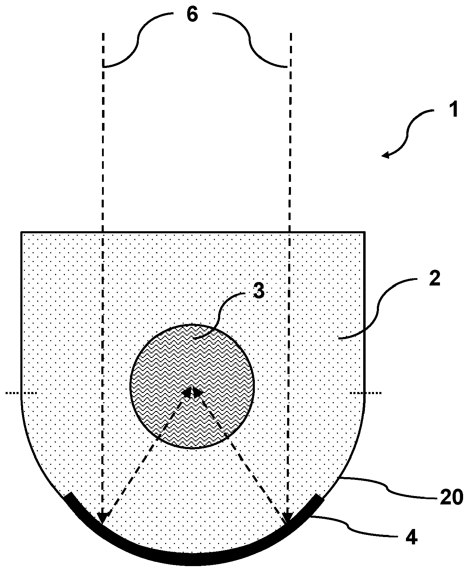

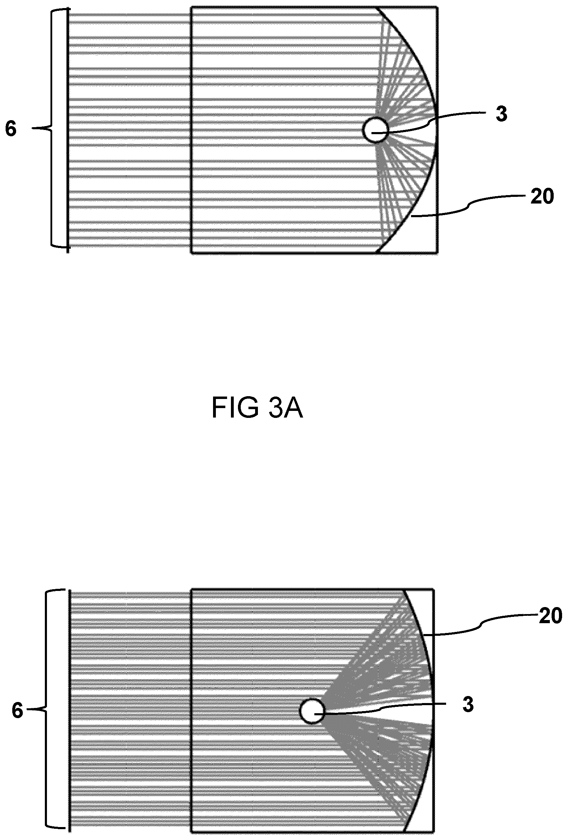

A particularly preferred arrangement is illustrated in Figure 2. In this arrangement the light focusing functionality is incorporated into the reactor, further compacting the reactor. Herein, the reactor wall 2 has a cross-section that comprises a parabolic segment 20. The parabolic segment is illustrated in Figure 2 below the horizontal dashed lines. This parabolic segment is typically at least partially, such as completely, coated with the reflective coating 4. The curvature of the parabolic segment may be adjusted to have different focusing effect. For instance a more curved parabolic segment typically provides for focusing the reflected beams to a focal point, such as the processing conduit, closer to the reflective coating than a less curved parabolic segment. This is schematically illustrated in Figure 3A-3B. In Figure 3A the curvature of the parabolic segment 20 is stronger than in Figure 3B, such that the incoming collimated light beam 6 is reflected to the processing conduit 3 at different distances to the parabolic segment.

The remaining part of the cross-section of the reactor wall is not particularly limiting. Nonetheless, it may be a rectangular shape (as also schematically illustrated in Figure 2, 3A-3B), such that the incoming light beam 6 is not distorted by the shape of the reactor wall for maximum usage of the incoming light. In such cases, it may be appreciated that there is no particular limitation on the distance of the processing conduit to the flat outer surface. However, it may be appreciated that the remaining part of the cross-section may also be more circular and/or elliptical. It may further be appreciated that the remaining part of the cross-section may alternatively function as a lens. For instance, by incorporating a Fresnel lens structure. Accordingly, the reactor wall preferably comprises a lens arranged to focus an incoming light beam to the processing conduit, preferably wherein the lens comprises a Fresnel lens.

Additionally, for ease of manufacture, the reflective coating is typically on an outer surface of the reactor wall. Thus, the reflective coating is typically on the surface of the reactor wall that is in contact with the outer environment. This also indicates that the preferred incoming light, perpendicular to the longitudinal direction of the reactor, typically has to travel through the entire width of the reactor before being reflected off the reflective coating.

A further aspect of the present invention relates to a kit of parts. A schematic overview is illustrated in Figure 4. The kit of parts 10, comprises the reactor 1 and a light focusing unit 5. The light focusing unit is configured to focus light waves from an incoming collimated light beam 6 to the processing conduit 3 of the reactor through the reactor wall. The light focusing unit preferably comprises a lens. Typically, the light focusing unit is located between the light source and the reactor. The exact type of lens and the distance of the lens to the reactor may be determined based on the specifications of the reactor and the shape of the reactor wall.

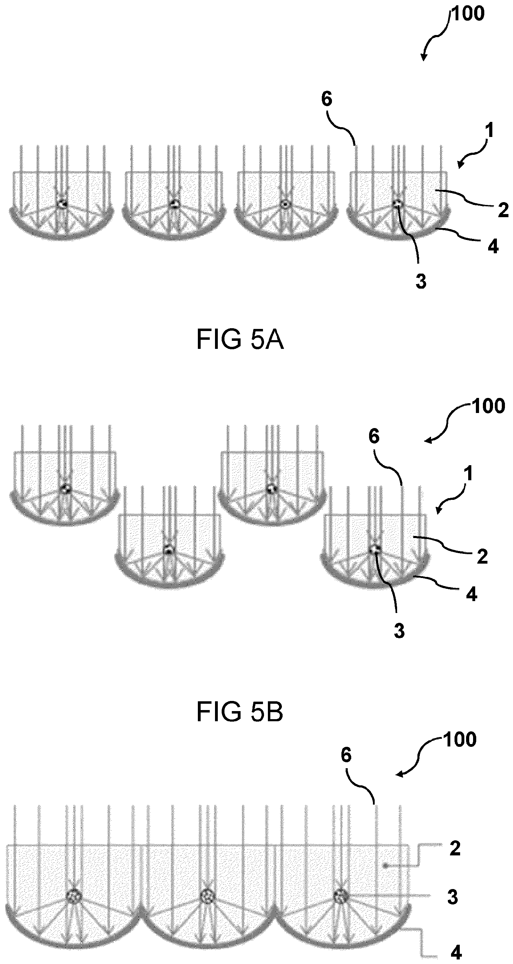

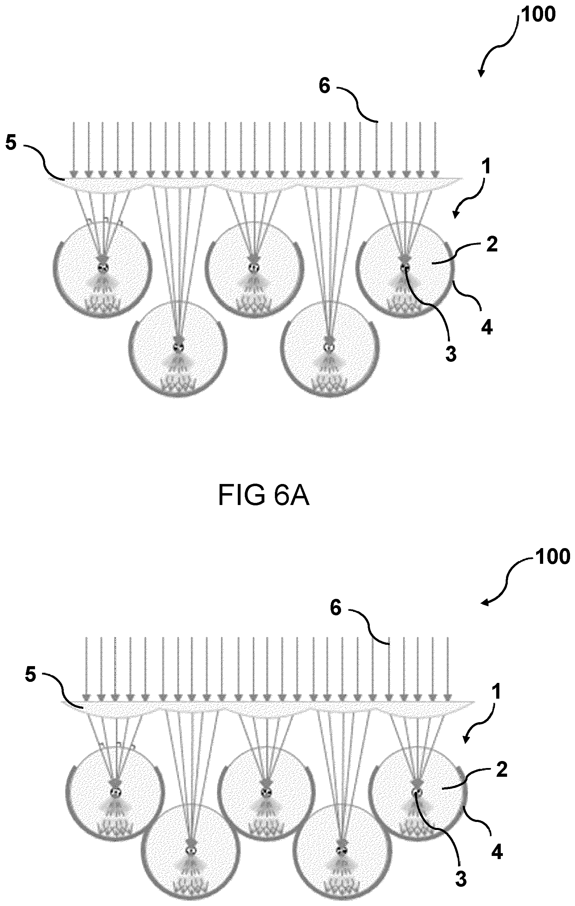

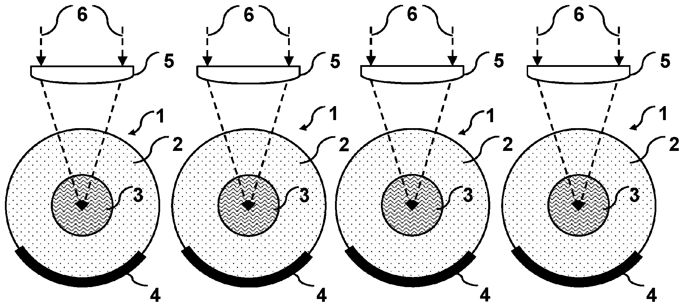

A further aspect of the invention relates to a reactor array. A reactor array may beneficially be used to further optimize light utilization and for upscaling of the reactor system in a small volume. Suitable examples thereof are illustrated in Figures 5, 6 and 7. The reactor array 100 comprises two or more reactors 1 as detailed herein. The reactors are typically located in a parallel arrangement to each other. The reactors may be in an inline arrangement, as illustrated in Figure 5A, Figure 5C and Figure 7. The inline arrangement may be distanced (illustrated in Figure 5A and Figure 7), *i.e.* with a void between the two or more reactors. Alternatively or additionally, the inline arrangement may be close packed, *i.e.* wherein the two or more reactors are in contact or merging together to form a single unit with multiple wall sections and the corresponding processing conduit, as illustrated in Figure 5C. Alternatively or additionally the reactors may be placed in a staggered arrangement as illustrated in Figures 5B and 6. The staggered arrangement typically results in a more efficient use of available space and the size of the beam. Accordingly, this arrangement may be preferred. The staggered arrangement may be such that there is a void between the reactors, as illustrated in Figures 5B and 6A, also referred to as distanced reactor array. Alternatively, or additionally, the staggered arrangement may be closed packed, *i.e.* essentially with the reactors in contact with each other, as illustrated in Figure 6B. Distanced arrangements (inline and/or staggered) typically allow for a flexible arrangement, as well as convenience for manufacturing and maintenance. The closed packed arrangement (inline and/or staggered) may allow for mechanical robustness and easy installation.

Preferably a collimated light beam may be provided that covers essentially the entire surface area (e.g. more than 95%) of the reactor array (surface area parallel to the longitudinal direction of the reactors). This is typically sufficient for reactors comprising reactor walls comprising the parabolic segment (*vide supra*).

Additionally, or alternatively, as herein detailed above for the kit of parts, a light focusing unit 5 may be present. This is particularly advantageous if the reactor wall has an essentially circular cross-section, or at least does not have an incorporated proper light focusing functionality. This light focusing unit is typically configured in the reactor array to focus light waves from incoming collimated light beams 6 to each of the processing conduits. The light focusing unit may be a single unit, as illustrated in Figure 6, of which its shape is configured to focus light waves from incoming collimated light beams 6 to each of the processing conduits. In such cases, the light focusing unit typically covers essentially all (e.g. more than 95% of the surface area) of the reactor array. In addition, the provided collimated light beam also typically covers essentially all of the surface area of the reactor array.

Alternatively, or additionally, the light focusing unit may comprise multiple light focusing entities, such as one or more separate lenses as schematically illustrated in Figure 7. Thus, the light focusing unit may in such cases be an array of lenses. The array of light focusing entities covers essentially all (e.g. more than 80%, preferably more than 95% of the surface area) of the reactor array. Typically a more targeted illumination is employed when one or more separate light focusing entities are present. This may allow for a narrow light beam profile. Additionally, it typically provides more flexibility. For instance, a single light focusing entity may be replaced or moved for optimal light usage efficiency.

A further aspect of the present invention relates to the use of the reactor, the kit of parts and/or the reactor array in combination with a collimated light beam for photoinduced reactions, preferably for multiphasic photochemical flow reactions or for photoinduced reactions in a supercritical phase. Several particularly preferred reactions include, but are not limited to, the Sabatier reaction (forming $CH_4$), reverse water gas shift reaction (forming CO), dry methane reforming (forming CO and $H_2$), steam reforming of methane (forming CO and $H_2$), ammonia cracking (forming $H_2$), $CO_2$ to methanol conversion (forming $CH_3OH$), methanol decomposition (forming CO and $H_2$) and/or methanol steam reforming (forming $H_2$). As detailed herein above, the collimated light beam may be provided by a collimated light source, such as the sun and/or a collimated laser beam. The size of the collimated laser beam can be adapted by proper optical lens. These collimated light sources are typically preferred due to the ease and minimal complexity. Additionally, these collimated light sources are not very energy demanding and, in particular the laser, allow for easy optimization and shaping of the light beam. Alternatively, or additionally, the collimated light beam may be provided by an uncollimated light source with extended light emitting surface e.g. LED in combination with a collimator. Uncollimated light sources with extended light emitting surface, without a collimator are typically not preferred as the light that is directed to the reactor is less concentrated than for a collimated light source, and accordingly result in a less energy efficient system.

A further aspect of the present invention relates to a method for producing a chemical compound or mixture of chemical compounds, comprising introducing a reactant, suitable for use in a photoinduced reaction, in a reactor according to the invention, exposing said reactant to a collimated light beam in the reactor, and allowing the reactant to react. Suitable reactants are e.g. those known for the uses described above, such as the Sabatier reaction (forming $CH_4$), reverse water gas shift reaction (forming CO), dry methane reforming (forming CO and $H_2$), steam reforming of methane (forming CO and $H_2$), ammonia cracking (forming $H_2$), $CO_2$ to methanol conversion (forming $CH_3OH$), methanol decomposition (forming CO and $H_2$) and/or methanol steam reforming (forming $H_2$).

For the purpose of clarity and a concise description features are described herein as part of the same or separate embodiments, however, it will be appreciated that the scope of the invention may include embodiments having combinations of all or some of the features described.

The invention may further be illustrated by the following nonlimiting examples.

**Example 1 - Theoretical efficiency**

The theoretical efficiency is determined for different reactor designs. For this calculation either 100% absorption in the processing conduit or 80% absorption in the conduit is assumed. Additionally, a perfectly collimated light beam input is assumed. The computed results are shown in Table 1.

*Table 1 - results of computed efficiencies for different reactor designs*

| No. | Reactor Design | Efficiency @ 0.9 $\mu$m, 100% absorber | Efficiency @ 0.9 $\mu$m, 80% absorber |
|---|---|---|---|
| 1 | Circular cross-section, no additional focusing | 14% | 11% |
| 2 | Circular cross-section, light focusing unit | 88% | 70% |
| 3 | Cross-section with parabolic segment, reflective coating | 93-95% | 74-76% |
| 4 | Cross-section with circular segment, reflective coating | 81-95% | 65-76% |

**Claims**

1. Reactor (1) for photoinduced reactions, said reactor comprising a reactor wall (2) and a processing conduit (3), wherein said reactor wall is at least partially transparent and at least partially coated with a reflective coating (4) along a circumferential and longitudinal direction of said reactor wall and wherein said reflective coating comprises a reflective side that is arranged to reflect light towards said processing conduit.

2. Reactor according to the previous claim, wherein said reactor wall is at least partially transparent for electromagnetic waves having a wavelength in the range of $10^{-9}$ to $10^{-3}$ m, preferably in the range of $10^{-8}$ to $10^{-5}$ m, more preferably in the range of 100 nm to 3000 nm and/or said reflective side reflects electromagnetic waves having a wavelength in the range of $10^{-9}$ to $10^{-5}$ m, preferably in the range of $10^{-8}$ to $10^{-5}$ m, more preferably in the range of 100 nm to 3000 nm.

3. Reactor according to any of the previous claims, wherein said reactor is a continuous or batch reactor, preferably a tubular shaped continuous or batch reactor, more preferably a flow reactor, more preferably a tubular flow reactor.

4. Reactor according to any of the previous claims, wherein said reactor wall and said processing conduit are co-axially arranged.

5. Reactor according to any of the previous claims, wherein said reflective coating is on an outer surface of said reactor wall and/or wherein said reflective coating is along essentially the longitudinal direction and partially along the circumferential direction of said reactor wall.

6. Reactor according to any of the previous claims, wherein said reactor wall is further at least partially coated with an anti-reflective coating along a circumferential and longitudinal direction of said reactor wall, wherein the anti-reflective coating is arranged to at least partially transmit an incoming light beam through the reactor wall.

7. Reactor according to any of the previous claims, wherein said processing conduit has an essentially circular cross-section, wherein the cross-section is perpendicular to the processing conduit's longitudinal direction.

8. Reactor according to any of the previous claims, wherein said reactor wall and reflective coating are configured to reflect an incoming light beam (6) to said processing conduit.

9. Reactor according to any of the previous claims, wherein said reactor wall has an essentially circular cross-section or wherein said reactor wall has a cross-section comprising a parabolic segment, preferably wherein said parabolic segment is coated with said reflective coating, wherein the cross-section is perpendicular to the reactor wall's longitudinal direction.

10. Reactor according to any of the previous claims, wherein said reactor wall comprises a lens surface arranged to focus an incoming light beam to the processing conduit, preferably wherein said lens comprises a Fresnel lens.

11. Reactor according to any of the previous claims, wherein said reactor wall comprises at least one filler material selected from the group of glass, quartz, fused silica, fluorine doped fused silica, borosilicate glass, polycarbonate, ceramic, metal oxide, tempered soda lime glass, sapphire, glass-ceramics, metal-oxide coated glass and porous filler materials.

12. Kit of parts (10) comprising a reactor (1) in accordance with any of the previous claims, further comprising a light focusing unit (5) configured to focus light waves from an incoming collimated light beam (6) to the processing conduit (3) of said reactor.

13. Reactor array (100) comprising two or more reactors according to any of the previous claims 1-11, preferably wherein said one or more reactors are in an inline arrangement and/or in a staggered arrangement.

14. Reactor array (100) according to the previous claim, further comprising one or more light focusing units configured to focus light waves from an incoming collimated light beam to each of the processing conduits.

15. Use of the reactor according to any of claims 1-11, the kit of parts according to claim 12 and/or the reactor array according to any of claims 13-14 in combination with a collimated light beam for photoinduced reactions, preferably for multiphasic photochemical flow reactions or photoinduced reactions in a supercritical phase.

FIG 1A

FIG 3A

100

6

1

2

4

3

FIG 5A

100

6

1

2

4

3

FIG 5B

100

6

2

3

4

FIG 6A

Europäisches
Patentamt

European
Patent Office

Office européen
des brevets

# EUROPEAN SEARCH REPORT

**Application Number**

EP 24 19 2863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/146813 A1 (SYZYGY PLASMONICS INC [US]) 16 July 2020 (2020-07-16) <br> * paragraphs [0059], [0062], [0067], [0085], [0088], [0090], [0093], [0125]; claims; figures * <br> ----- | 1-15 | INV. <br> B01J19/12 <br> B01J19/24 |
| A | WO 2015/142330 A1 (SCHLUMBERGER CA LTD [CA]; SCHLUMBERGER SERVICES PETROL [FR] ET AL.) 24 September 2015 (2015-09-24) <br> * paragraphs [0061], [0068]; claims; figures * <br> ----- | 1-15 | |
| A | WO 2022/161881 A1 (SIGNIFY HOLDING BV [NL]) 4 August 2022 (2022-08-04) <br> * claims; figures * <br> ----- | 1-15 | |
| A | US 2023/135557 A1 (BROERSMA REMY CYRILLE [NL] ET AL) 4 May 2023 (2023-05-04) <br> * paragraph [0069]; claims; figures * <br> ----- | 1-15 | |
| A | US 2013/121889 A1 (USAMI HISANAO [JP]) 16 May 2013 (2013-05-16) <br> * paragraph [0064]; claims; figures * <br> ----- | 1-15 | TECHNICAL FIELDS SEARCHED (IPC) <br><br> B01J |

The present search report has been drawn up for all claims

| Place of search | Date of completion of the search | Examiner |
|---|---|---|
| Munich | 13 January 2025 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

# EP 4 691 620 A1

## ANNEX TO THE EUROPEAN SEARCH REPORT
## ON EUROPEAN PATENT APPLICATION NO.

EP 24 19 2863

13-01-2025

| Patent document cited in search report | Publication date | Patent family member(s) | | Publication date |
|---|---|---|---|---|
| WO 2020146813 A1 | 16-07-2020 | WO | 2020146799 A1 | 16-07-2020 |
| | | WO | 2020146813 A1 | 16-07-2020 |
| WO 2015142330 A1 | 24-09-2015 | NONE | | |
| WO 2022161881 A1 | 04-08-2022 | CN | 116761784 A | 15-09-2023 |
| | | EP | 4284758 A1 | 06-12-2023 |
| | | US | 2024316525 A1 | 26-09-2024 |
| | | WO | 2022161881 A1 | 04-08-2022 |
| US 2023135557 A1 | 04-05-2023 | EP | 3881930 A1 | 22-09-2021 |
| | | EP | 4121202 A1 | 25-01-2023 |
| | | US | 2023135557 A1 | 04-05-2023 |
| | | WO | 2021185701 A1 | 23-09-2021 |
| US 2013121889 A1 | 16-05-2013 | CN | 103052441 A | 17-04-2013 |
| | | JP | 5429947 B2 | 26-02-2014 |
| | | JP | WO2012017637 A1 | 03-10-2013 |
| | | KR | 20130037711 A | 16-04-2013 |
| | | US | 2013121889 A1 | 16-05-2013 |
| | | WO | 2012017637 A1 | 09-02-2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMBIAGIO** ; **NOËL**. *Trends in Chemistry*, February 2020, vol. 2 (2)

- **MICHAEL OELGEMÖLLER**. *Chem Rev.*, 2016, vol. 116, 9664-9682